# EUROPEAN PATENT APPLICATION

(11) **EP 4 541 572 A1**
(43) Date of publication of application: **23.04.2025**
(21) Application number: 23211774.7
(22) Date of filing: 23.11.2023
(51) Int. Cl.: B29D 35/00, B29D 35/12, B29C 44/60

(54) **MIDSOLE MANUFACTURING DEVICE CAPABLE OF CONTROLLING MIXING RATIO OF RECYCLED AND NEW EVA FOAM**

(30) Priority: 16.10.2023 KR 20230137436
(71) Applicant: GN International Co.,Ltd., Busan Busan 46908 (KR)
(72) Inventor: CHAE, Geon Ha, 47508 Busan (KR)
(74) Representative: Kaya, Erdem

(57) **Abstract**

A midsole manufacturing device includes: a recycled raw material production unit that produces a recycled raw material; a recycled raw material storage unit that stores the recycled raw material; a new raw material storage unit that stores a new raw material by receiving the new raw material; a midsole molding device that receives the recycled raw material and the new raw material to manufacture a midsole using a mixed raw material; a raw material ratio calculation unit that receives physical property information about the recycled raw material and the new raw material, and derives a weight ratio of the recycled raw material and the new raw material by using required physical property information and physical properties of the recycled raw material and the new raw material; and a raw material supply unit that supplies the recycled raw material and the new raw material to the midsole molding device.

## Description

### BACKGROUND OF THE INVENTION

### Field of the Invention

The present invention relates to a device for manufacturing midsole fabric with a new raw material by processing a defective product from among shoe midsole products, a joint material discharged from a midsole molding device, and other external EVA products into a material that can be recycled through processing such as pulverizing or the like, and more specifically, to a technology for controlling a ratio between a recycled raw material and a new raw material in order to enable supply of a high-purity recycled raw material and to implement physical properties required for a midsole based on physical properties between the recycled raw material and the new raw material.

### Description of the Related Art

An ethylene-vinyl acetate (EVA) sponge is one of petrochemical products and is used as a material for midsoles and outsoles of sneakers, solar cell materials, extrusion coating materials, etc. Ethylene-vinyl acetate, also known as poly(ethylene-vinyl acetate), is a copolymer of ethylene and vinyl acetate. The weight percent (wt%) of vinyl acetate is generally 10 to 40%, and the remainder thereof is ethylene. Broadly speaking, there are three types of EVA copolymers with different vinyl acetate content and material usage.

An EVA sponge is in spotlight as a material to replace PVC or the like because it is harder than a regular sponge, harmless to the human body, and an eco-friendly material. With the EVA sponge, a product is manufactured by processing raw materials through foaming, dyeing, or the like to produce a specific shape of fabric, and pressing the fabric and trimming edges thereof.

Due to the above-described characteristics, the EVA sponge fabric has a great effect such as shock absorption, and is especially used to manufacture a shoe sole, that is, a midsole. In this case, in order to minimize the generation of waste subsidiary materials depending on the shape of the midsole, recently, a midsole has been manufactured by foam-molding EVA foam as an EVA raw material in a midsole-shaped foam mold.

When the midsole is manufactured, a defective midsole is manufactured, or a joint material between the midsoles, which is molded while being foamed along a foaming line existing on the mold in order to foam the EVA foam in a foaming mold, is treated as waste. As a prior art for pulverizing such waste, various devices are disclosed in a document published on the Internet (https://shengxinze.en.made-in-china.com/pruduct/kMQmPXdEHjpl/China-EVA-Pulverizer-Rubber-Pulverizer-Rubber-Crusher.html). The prior art has been applied to a technology of manufacturing a recycled raw material in the form of granules or powder by pulverizing an EVA waste member using a grinder or the like when the EVA waste member is inserted through a hopper, and processing the EVA waste member through an additive.

However, recently, various shoe manufacturers have determined a mixing ratio of the recycled raw material and the new raw material, and have required the midsole manufacturer of the mixing ratio. Particularly, when foreign substances contained in the waste member to be recycled are processed together, the quality of the EVA raw material may deteriorate, and the existing prior art cannot solve this problem. Particularly, this leads to an increase in issues when using waste members, such as solar cell materials and extrusion coating materials, as well as defective midsole products or midsole joint materials.

Moreover, various physical properties of the recycled raw material, such as elasticity, heat resistance, stretchability, strength, etc., depending on a source of the recycled raw material, may be different from physical properties of midsoles required by customers. However, this is inevitable due to minute differences in raw materials and processing methods of processed raw materials. In this case, desired physical properties are not derived when the recycled raw materials are mixed, and thus reliability for the product quality may deteriorate.

### SUMMARY OF THE INVENTION

Accordingly, the present invention has been made in an effort to solve the problems of the existing technologies, and particularly, an object of the present invention is to provide a technology for manufacturing a midsole by producing a high-purity EVA recycled raw material through filtering a waste subsidiary material in which foreign substances, which may be effectively removed and may not be removed according to physical properties of the recycled raw material, are mixed and mixing the EVA recycled raw material with a new raw material.

Another object of the present invention is to provide a technology for manufacturing a high-quality midsole, which is customized according to customer needs, even when a recycled raw material is mixed, by automatically controlling a mixing ratio of the recycled raw material and a new raw material using an analysis result of the recycled raw material and the new raw material and physical properties required for a midsole product so as to use the mixing ratio in molding the midsole.

To achieve the above objects, according to one embodiment of the present invention, a midsole manufacturing device capable of controlling a mixing ratio of recycled and new EVA foam includes: a recycled raw material production unit that produces a recycled raw material by processing a waste subsidiary material; a recycled raw material storage unit that stores the recycled raw material produced by the recycled raw material production unit; a new raw material storage unit that stores a new raw material, which is EVA foam, by receiving the new raw material; a midsole molding device that receives the recycled raw material and the new raw material from the recycled raw material storage unit and the new raw material storage unit, respectively, to manufactures a midsole using a mixed raw material; a raw material ratio calculation unit that receives physical property information about the recycled raw material and the new raw material from the recycled raw material storage unit and the new raw material storage unit, respectively, and derives a weight ratio of the recycled raw material and the new raw material by using required physical property information input from a customer account and physical properties of the recycled raw material and the new raw material; and a raw material supply unit that supplies the recycled raw material and the new raw material to the midsole molding device according to the weight ratio derived from the raw material ratio calculation unit.

The recycled raw material production unit may include: an inlet unit into which a waste subsidiary material discharged when the midsole is manufactured and an external waste subsidiary material are introduced; a pre-treatment unit that treats the waste subsidiary material introduced from the introduction unit to process the waste subsidiary material into a material to be recycled; and a recycled material production unit that produces recycled powder by pulverzing and processing the material to be recycled, which is processed by the pre-treatment unit.

The recycled raw material production unit may further include: a first physical property sensing unit that is installed in a transfer line for transferring the material to be recycled, which is processed by the pre-treatment unit, to sense physical properties of the material to be recycled that is moved; and a control unit that transfers the material to be recycled to one of a suitable material transfer line for transferring the material to be recycled to the recycled material production unit and a waste transfer line for transferring the material to be recycled to an outside for waste treatment, serving as a line branching from the transfer line according to a sensing result of the first physical property sensing unit.

The first physical property sensing unit may include: an image capturing device that is installed on an upper surface of the transfer line to capture an image of the material to be recycled at a plurality of angles; a volume calculation unit that generates a three-dimensional image of the material to be recycled based on the image captured by the image capturing device and calculates a volume of the material to be recycled from the generated three-dimensional image; a load sensor that is installed in the transfer line to sense a load of the material to be recycled; a density calculation unit that calculates a density of the material to be recycled based on the volume calculated by the volume calculation unit and the load sensed by the load sensor, and a recyclability determination unit that determines supply of the material to be recycled to the recycled material production unit by comparing the density of the material to be recycled, which is calculated by the density calculation unit, with a pre-stored range section of a suitable density of an EVA material.

The midsole manufacturing device may further include: a second physical property sensing unit that is installed in the recycled raw material storage unit to sense the physical properties of the recycled raw material; and a third physical property sensing unit that is installed in the new raw material storage unit to sense the physical properties of the new raw material, wherein the raw material ratio calculation unit may receive the physical property information about the recycled raw material and the new raw material from the second physical property sensing unit and the third physical property sensing unit, respectively, and may apply the physical property information about the recycled raw material, the physical property information about the new raw material, and the required physical property information to a physical property derivation algorithm, which is an algorithm for deriving physical property information using two different physical property information, to derive the weight ratio of the recycled raw material and the new raw material.

The physical property information may include information about elasticity, heat resistance, stretchability, pressure resistance, and density, and the second physical property sensing unit and the third physical property sensing unit may include: component analysis devices that are installed in the recycled raw material storage unit and the new raw material storage unit, respectively; and a physical property derivation unit that derives physical property information about a measured target raw material by comparing a component of a material derived from the component analysis device with a physical property information of materials pre-stored in a physical property information table.

The midsole molding device may be a multiple-nozzle type midsole molding device which supplies a various types of raw materials into a mold to perform foam-molding, in which mixed raw materials having mutually different weight ratios of a recycled raw material and a new raw material are foamed in a plurality of nozzles, and the raw material ratio calculation unit may derive mutually different weight ratios of raw materials to be supplied for each nozzle.

The raw material supply unit may include: a plurality of first transfer lines that provide a movement path through which the raw materials are transferred from the recycled raw material storage unit and the new raw material storage unit; a first valve that is installed for each of the first transfer lines; a first pump that is installed in each of the first transfer lines to provide a moving force; a mixing line which is combined with the first transfer lines and in which the recycled raw material and the new raw material are mixed; a plurality of second transfer lines branching from the mixing line toward a raw material temporary storage unit for supplying the raw materials to the plurality of nozzles; a relay-type second valve that controls connection of the mixing line and each of the second transfer line; a second pump that supplies the mixed raw material from a plurality of temporary raw material storage units to the nozzle; and a mixing control unit that controls the first valve, the second valve, the first pump, and the second pump using the weight ratio of the raw material derived from the raw material ratio calculation unit and identification information of the nozzle to which the weight ratio of the raw material is to be applied.

When the weight ratios of the two nozzles are derived from among the plurality of nozzles, the raw material ratio calculation unit may automatically derive a weight ratio of one nozzle, which foams the raw material in a region located between two nozzles, as an average value of weight ratios of the two nozzles.

According to various embodiments described in the present invention, after removing foreign substances on the outer surface, only the recyclable high-purity waste subsidiary materials are put into the recycled raw material production unit through physical property analysis to produce a recycled raw material. Therefore, a high-purity recycled raw material is automatically produced even when the waste subsidiary materials from various sources are used, and accordingly, it is possible to manufacture a high-purity midsole of EVA material even if the new raw material is mixed.

In addition, the physical properties of the recycled raw material and the new raw material are precisely analyzed, and a weight ratio of a mixture of the recycled raw material and the new raw material for implementing the required physical properties is automatically calculated by using the required property information set through the data reception, such as input from the customer account, and the analyzed physical properties of the recycled raw material and the new raw material, and then the recycled raw material and the new raw material are mixed according to the automatically determined ratio based on the calculated weight ratio to foam the mixture in the midsole mold. Accordingly, it is possible to manufacture a high-quality midsole, which is precisely customized according to customer needs, even if the recycled materials with unknown detailed components and physical properties are mixed.

### BRIEF DESCRIPTION OF THE DRAWINGS

FIG. 1 is a view showing a configuration of a midsole manufacturing device capable of controlling a mixing ratio of recycled and new EVA foam according to one embodiment of the present invention.
FIG. 2 is a view showing a detailed configuration of a recycled raw material production unit according to one embodiment of the present invention.
FIG. 3 is a view for explaining functions of a first physical property sensing unit and a control unit according to one embodiment of the present invention.
FIG. 4 is a view for explaining an implementation of the first physical property sensing unit according to one embodiment of the present invention.
FIG. 5 is a view for explaining a function of a raw material ratio calculation unit according to one embodiment of the present invention.
FIG. 6 is a view for explaining an example of a configuration of a midsole molding device according to one embodiment of the present invention.
FIG. 7 is a view for explaining a configuration and a function of a raw material supply unit according to one embodiment of the present invention.
FIG. 8 is a view showing an example of an internal configuration of a computing device according to one embodiment of the present invention.

### DETAILED DESCRIPTION OF THE INVENTION

Hereinafter, various embodiments and/or aspects will be disclosed with reference to drawings. In the following description, multiple concrete details will be disclosed in order to help general understanding of one or more aspects for the purpose of description. However, it will be recognized by those skilled in the art that the aspect(s) can be executed without the concrete details. In the following description and accompanying drawings, specific exemplary aspects of one or more aspects will be described in detail. However, the aspects are exemplary, and some equivalents of various aspects may be used, and the descriptions herein are intended to include both the aspects and equivalents thereto.

It is not intended that any "embodiment", "example", "aspect", "illustration", and the like used in the specification is preferable or advantageous over any other "embodiment", "example", "aspect", "illustration", and the like.

Further, the terms "includes" and/or "including" mean that a corresponding feature/or component exists, but it should be appreciated that the terms "include" or "including" mean that presence or addition of one or more other features, components, and/or a group thereof is not excluded.

Further, terms including an ordinal number such as "first" or "second' may be used for the names of various components, not limiting the components. These expressions are used to distinguish one component from another component. For example, a first component may be referred to as a second component and vice versa without departing the scope of the present invention. The term "and/or" includes a combination of a plurality of related enumerated items or any of the plurality of related enumerated items.

In addition, unless otherwise defined, all terms used herein, including technical or scientific terms, have the same meaning as commonly understood by one of ordinary skill in the art to which this invention belongs. Terms such as those defined in commonly used dictionaries should be interpreted as having a meaning consistent with the contextual meaning of the related art and should not be interpreted as either ideal or overly formal in meaning unless explicitly defined in the present invention.

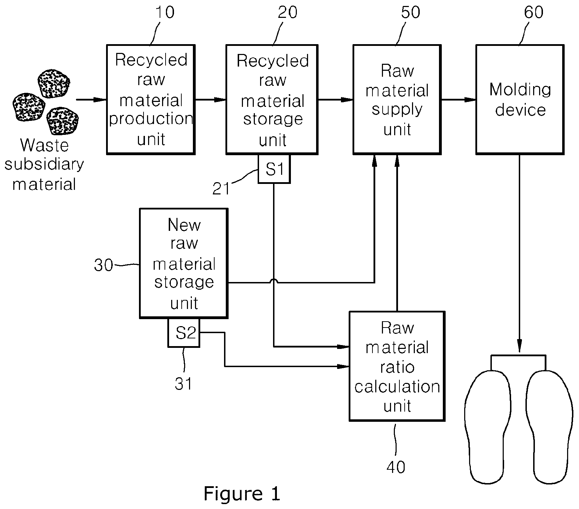

FIG. 1 is a view showing a configuration of a midsole manufacturing device capable of controlling a mixing ratio of recycled and new EVA foam according to one embodiment of the present invention,

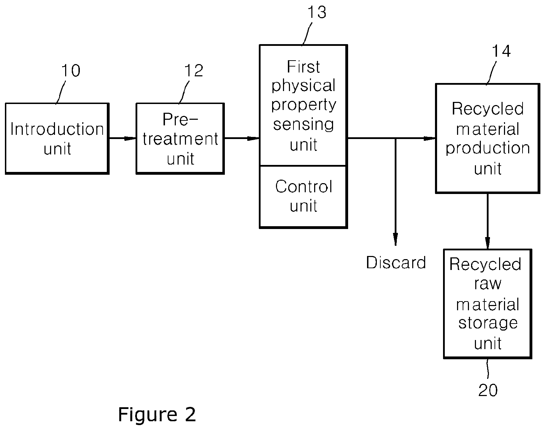

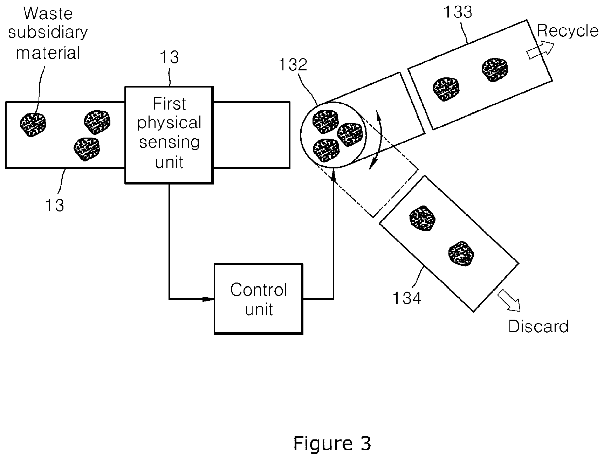

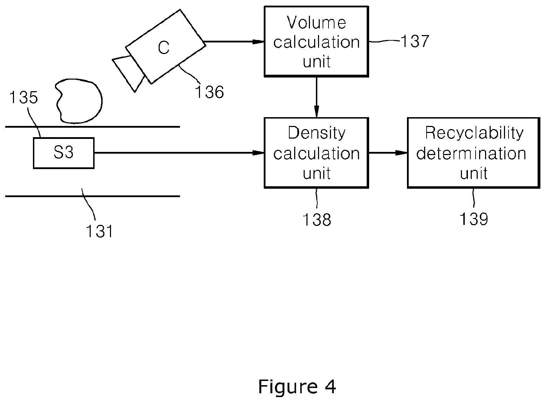

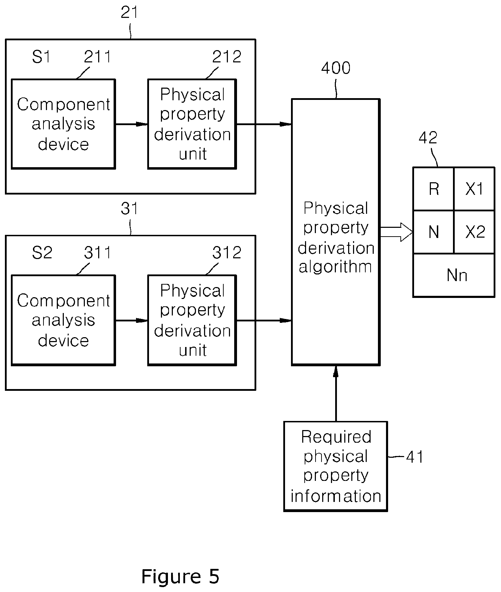

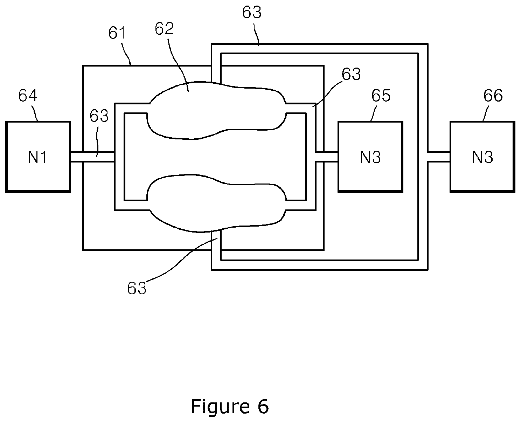

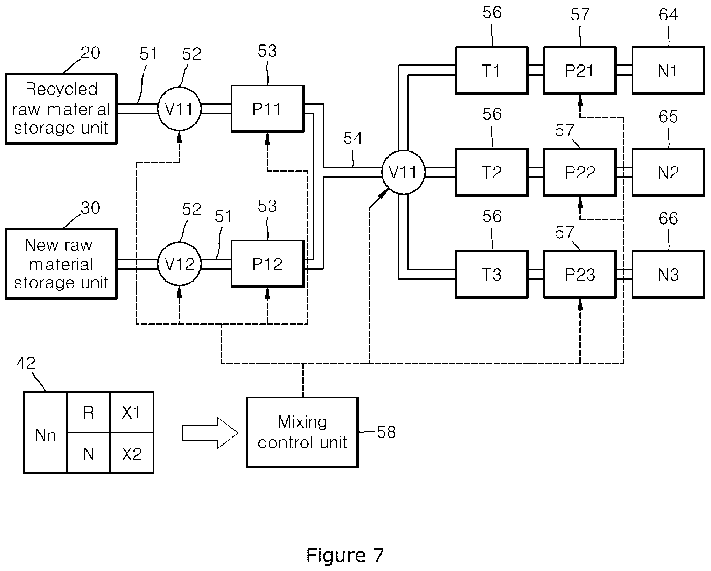

FIG. 2 is a view showing a detailed configuration of a recycled raw material production unit according to one embodiment of the present invention, FIG. 3 is a view for explaining functions of a first physical property sensing unit and a control unit according to one embodiment of the present invention, FIG. 4 is a view for explaining an implementation of the first physical property sensing unit according to one embodiment of the present invention, FIG. 5 is a view for explaining a function of a raw material ratio calculation unit according to one embodiment of the present invention, FIG. 6 is a view for explaining an example of a configuration of a midsole molding device according to one embodiment of the present invention, and FIG. 7 is a view for explaining a configuration and a function of a raw material supply unit according to one embodiment of the present invention.

Meanwhile, in the following description, the components described in the drawings are illustrated by omitting some components or excessively enlarging or reducing the components in order to explain the functions of each component of the present invention, but it will be understood that the corresponding elements do not limit the technical features and the scope of the present invention. Further, in the following description, a plurality of drawings will be referred to and described at the same time in order to describe one technical feature or a component constituting the present invention. Referring to the drawings, a midsole manufacturing device capable of controlling a mixing ratio of the recycled and new EVA foam (hereinafter, referred to as a "device of the present invention") includes a recycled raw material production unit 10, a recycled raw material storage unit 20, a new raw material storage unit 30, a midsole molding device 60, a raw material ratio calculation unit 40, and a raw material supply unit 50. In addition, various components to be described later may be included in the device of the present invention as additional components according to various embodiments of the present invention.

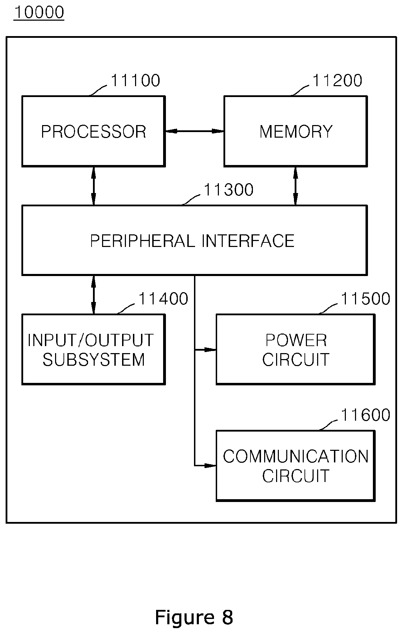

In the following description, the raw material ratio calculation unit 40, a first physical property sensing unit, a control unit 13, second to third physical property sensing units 21 and 31, and all components performing transmission/reception, sensing, and processing of data in the device of the present invention may be understood as, for example, one terminal or a plurality of terminals, and may be configured as a computing device as shown in FIG. 8, or may be implemented as electronic-driven equipment based thereon.

The recycled raw material production unit 10 refers to a device element that performs a function of producing a recycled raw material by treating a waste subsidiary material. Specifically the recycled raw material production unit 10 produces a powder-type recycled raw material through removal of foreign substances and a foaming process by receiving a waste subsidiary material as a fabric element discharged when a midsole is manufactured, except for a midsole such as a joint member, and various waste subsidiary materials introduced from an outside, such as other solar cell materials, extrusion coating materials, etc.

Specifically, the recycled raw material production unit 10 may include detailed components as shown in FIGS. 2 to 4 in order to perform the above function. For example, the recycled raw material production unit 10 may include an inlet unit 11, a pre-treatment unit 12, and a recycled material production unit 14. The recycled raw material production unit 10 may further include the first physical property sensing unit and the control unit 13.

The inlet unit 11 refers to a structure in which the waste subsidiary material discharged when the midsole is manufactured and an external waste subsidiary material are introduced. The inlet unit 11 may be understood to refer to, for example, a hopper at an upper portion of the pre-treatment unit 12, or may include, for example, a mesh filter or a filter for allowing only the waste subsidiary material having a predetermined size or less or more to be introduced into the pre-treatment unit 12, a conveyor belt or an inclined surface for transferring the waste subsidiary material, or the like.

The pre-treatment unit 12 treats the waste subsidiary material introduced from the inlet unit 11 to process the waste subsidiary material into a material to be recycled. To this end, the pre-treatment unit 12 receives power through the control of an external power supply unit and an external terminal, or controls operations thereof. For example, the pre-treatment unit 12 may pulverize the waste subsidiary material into a predetermined size through a plurality of devices or may remove foreign substances on an outer surface.

To this end, for example, the pre-treatment unit 12 may include a milling device, a washing unit, and a drying device to improve purity by removing the foreign substances from the waste subsidiary material as described above.

The milling device may be implemented as any one of various cutting equipment such as a ball mill, a plane cutter, a side cutter or a side milling cutter, an end mill, an angular cutter, and a formed cutter, and cuts the outer surface of the waste subsidiary material to a predetermined thickness.

For example, the predetermined thickness described in the present invention may have a minimum value that corresponds to an application thickness of a separation film or the like, which is applied to midsole fabric for separation from a mold or the like when the midsole is manufactured, and may be set to, for example, a value within a range up to 1.3 times the minimum value.

The washing unit washes the waste subsidiary material, which has passed through the milling device, that is, the waste subsidiary material, which is milled to remove the foreign substances on the outer surface according to the above-described function, by injecting a high-pressure washing solution to remove the foreign substances remaining on the surface.

The drying device dries the waste subsidiary material by injecting air into the waste subsidiary material in order to remove moisture absorbed to the outer surface or the inner surface as the waste subsidiary material passes through the washing unit. The air injected according to the drying function may have a predetermined temperature value.

For example, the recycled material production unit 14 may include a foaming device as a midsole molding device of EVA foam in order to produce recycled powder. That is, in order to have the same physical properties as new EVA foam, the recycled powder may be also implemented by the foaming device in the same manner as the midsole molding device of the EVA foam. In this case, due to characteristics of the foaming device, since powder is produced through foaming after treating the EVA material at a high temperature, an increase to a predetermine high temperature is required. Accordingly, an effect of energy saving is obtained when a temperature of the waste subsidiary material is increased in the drying device in advance in preparation for the increase to a high temperature in the recycled material production unit 14. At the same time, a natural drying effect of the drying device may be increased when hot air is injected. To this end, for example, the drying device may inject air having a predetermined temperature into the waste subsidiary material to preheat the waste subsidiary material to the predetermined temperature and dry the waste subsidiary material, may soften the physical properties of the waste subsidiary material at the same time, and may supply the softened physical properties of waste subsidiary material to the foaming device, that is, the recycled material production unit 14.

The recycled material production unit 14 produces recycled powder by pulverizing and processing the material to be recycled, which is processed by the pre-treatment unit 12. To this end, in addition to the foaming device described above, the recycled material production unit 14 may include a fine pulverizing device, a heating furnace, and the like as components.

The recycled material production unit 14 performs the above-described function to produce recycled powder having the same or similar physical characteristics as or to the new EVA foam, and mixes the recycled powder with the new EVA foam in a raw material supply unit 50, which will be described later, to produce an EVA raw material for manufacturing midsole fabric.

In this case, even if the pre-treatment unit 12 removes the foreign substances on the outer surface, for example, the foreign substances introduced from the outside may contain foreign substances for performing a function of materials such as solar cell materials and extrusion coating materials.

If there are too many internal foreign substances, when the recycled material production unit 14 treats the internal foreign substances, the recycled powder contains the foreign substances and may not be used as an EVA raw material, and thus a specific component for filtering the foreign substances is required.

To this end, as shown in FIGS. 2 and 3, a filtering device 13 including the physical property sensing unit and the control unit may be provided between the pre-treatment unit 12 and the recycled material production unit 14 as an additional component of the device of the present invention.

For example, the physical property sensing unit is installed on a transfer line 131 for transferring the material to be recycled, which is processed by the pre-treatment unit 12, to sense physical properties of the material to be recycled that is moved.

For example, the physical property sensing unit may be configured as a component analysis device implemented with ultrasonic waves, a laser, an optical sensor, or the like, and installed in the transfer line 131. However, since the component analysis device is relatively expensive, the device may be applied to an expensive version device of the present invention.

FIG. 4 shows a configuration that may be implemented at a relatively lower cost than the above component analysis device. For example, the physical property sensing unit may include an image capturing device 136, a volume calculation unit 137, a load sensor 135, a density calculation unit 138, and a recyclability determination unit 139. The image capturing device 136 is installed on an upper surface of the transfer line 131 to capture an image of the material to be recycled at a plurality of angles. The volume calculation unit 137 generates a three-dimensional image of the material to be recycled based on images captured at various angles by the image capturing devices 136, and calculates a volume of the material to be recycled based on the three-dimensional image.

The load sensor 135 is installed in the transfer line 131 to sense a load of the material to be recycled at a position where the image is captured by the image capturing device 136, and the density calculation unit 138 calculates a density of the material to be recycled based on the volume calculated by the volume calculation unit 137 and the load sensed by the load sensor 135.

In this case, a content of foreign substances in the material to be recycled may be calculated very precisely by using a difference in density between the foreign substances and the EVA raw material. That is, by using the density of 100% of the EVA raw material, the volume and load are calculated, and the content of foreign substances is calculated based on the density.

The recyclability determination unit 139 determines supply of the material to be recycled to the recycled material production unit 14 by comparing the density of the material to be recycled calculated by the density calculation unit 138 with a pre-stored range section of a suitable density of the EVA raw material based on the above principle.

Meanwhile, the component analysis device may immediately analyze a purity of the EVA raw material except for the algorithm as described above, and accordingly, when the component analysis device includes the recyclable determination unit 139, the determination is made on the supply of the material to be recycled to the recycled material production unit 14.

According to the determination as described above, the control unit transfers of the material to be recycled to one of a suitable material transfer line 133 for transferring the material to be recycled to the recycled material production unit 14 and a waste transfer line 134 for transferring the material to be recycled to the outside for waste treatment, serving as a line branching from the transfer line 131 according to a sensing result of the physical property sensing unit. To this end, the control unit 13 has a rotating plate-type inclined path 132, and a direction in which an outlet of the inclined path is directed is determined as one of the suitable material transfer line 133 and the waste transfer line 134 according to the determination result of the physical property sensing unit for the material to be recycled disposed in the inclined path 132. Accordingly, the material to be recycled moves to any one of the lines 133 and 134. Meanwhile, all of the transfer lines 131, 133, and 134 may be formed of a conveyor belt or an inclined surface.

Meanwhile, a midsole molding device 60 refers to a configuration including a foam molding device that manufactures a midsole using mixed raw materials obtained by receiving the recycled raw material and the new raw material from the recycled raw material storage unit 20 and the new raw material storage unit 30, respectively and mixing the same. A specific structure of the midsole molding device 60 and detailed components for the same will be described later.

The raw material ratio calculation unit 40 receives physical property information about the recycled raw material and the new raw material from the recycled raw material storage unit 20 and the new raw material storage unit 30, respectively, and derives a weight ratio of the recycled raw material and the new raw material by using required physical property information input from a customer account and physical properties of the recycled raw material and the new raw material.

Meanwhile, the raw material supply unit 50 supplies the recycled raw material and the new raw material to the midsole molding device 60 according to the weight ratio derived from the raw material ratio calculation unit 40.

According to the functions of the midsole molding device 60, the raw material ratio calculation unit 40, and the raw material supply unit 50, the raw material ratio calculation unit 40 receives the physical property information about the recycled raw material and the new raw material from the recycled raw material storage unit 20 and the new raw material storage unit 30, respectively, and then, as pre-stored information, a component ratio (weight ratio) of each raw material is derived by comparing the physical properties of the recycled raw material and the new raw material based on the required physical property information, which is information about physical properties of the midsole required when the midsole is manufactured, as the physical property information stored while being input from the customer account or a management account.

Information about the derived weight ratio is transmitted to the raw material supply unit 50, the raw material supply unit 50 transmits the recycled raw material and the new raw material, each of which has a predetermined ratio, from the recycled raw material storage unit 20 and the new raw material storage unit 30 to the midsole molding device 60 through a specific configuration to be described later, and the midsole molding device 60 performs foam-molding on the mold using the received mixed raw material, that is, a raw material produced as a result of mixing the recycled raw material with the new raw material, thereby molding the midsole. The molding of the midsole described in the present invention may be understood as a concept including all processes of forming the midsole by foam-molding the raw material into the mold through a midsole foam-molding device, followed by posttreatment and carrying-out of the same, or manufacturing the midsole fabric.

In order to perform the function as described above, as an additional configuration, a configuration capable of sensing the physical properties of the recycled raw material by the recycled raw material storage unit 20 and a configuration capable of sensing the physical properties of the new raw material by the new raw material storage unit 30 are required. To this end, the device of the present invention may further include a second physical property sensing unit 21 and a third physical property sensing unit 31 as additional components.

As shown in FIGS. 1 and 5, etc., the second physical property sensing unit 21 and the third physical property sensing unit 31 are installed in the recycled raw material storage unit 20 and the new raw material storage unit 30 to sense the physical properties of the recycled raw material and the new raw material, respectively. The second physical property sensing unit 21 and the third physical property sensing unit 31 may be implemented with an image capturing device, a load sensor, a volume calculation unit, a density calculation unit, and a processor for predicting the physical properties using the image capturing device, the volume calculation unit, the density calculation unit, and the density calculation unit so as to sense the physical properties of the raw materials through the same process as the first physical property sensing unit described above, but may be implemented with the component analysis device described above in consideration of the sizes and structures of the raw material storage units 20 and 30.

In this case, the raw material ratio calculation unit 40 may receive the physical property information about the recycled raw material and the new raw material from the second physical property sensing unit 21 and the third physical property sensing unit 31, respectively, and may apply the physical property information about the recycled raw material, the physical property information about the new raw material, and the required physical property information to a physical property derivation algorithm, which is an algorithm for deriving physical property information using two different physical property information, to derive the weight ratio of the recycled raw material and the new raw material. Specifically, the component analysis device is a device for analyzing a component of each of the recycled raw material and the new raw material. Therefore, the second and third physical property sensing units 21 and 31 require a configuration for deriving the physical properties of each of the recycled raw material and the new raw material not only through the component analysis device, but also through the components analyzed by the component analysis device and the ratio thereof.

For example, the physical properties to be derived in the present invention may include information about, for example, elasticity, heat resistance, stretchability, pressure resistance, and density in consideration of characteristics of the midsole. In consideration of the above contents, in addition to the component analysis devices installed in the recycled raw material storage unit 20 and the new raw material storage unit 30, the second physical property sensing unit 21 and the third physical property sensing unit 31 may have a configuration for deriving the physical properties of each of the raw materials from components of materials derived from each component analysis device.

That is, in addition to component analysis devices 211 and 311 as shown in FIG. 5, the second physical property sensing unit 21 and the third physical property sensing unit 31 may include physical property derivation units 212 and 312 that derive physical property information about a measured target raw material by comparing a component of the material derived from the component analysis device with a physical property information of materials pre-stored in a physical property information table.

For example, the physical property information table refers to a data sheet including information about physical properties of each component by using data such as a material safety data sheet (MSDS), COA, mill sheet, and the like about a new raw material component that may be introduced into the device of the present invention and a component that may be contained in the waste subsidiary material.

The physical property derivation units 212 and 312 are implemented with one processor or independent processors for each of the second physical property sensing unit 21 and the third physical property sensing unit 31, and derive the physical properties of each of the raw materials based on the information received from the component analysis devices 211 and 311 using the above data. Accordingly, as shown in FIG. 5, a physical property derivation algorithm 400 capable of deriving the weight ratio of the recycled raw material and the new raw material for achieving required physical property information 41 by a simple ratio calculation may be constructed by comparing the required physical property information 41 with the physical properties of the recycled raw material and the new raw material, and a weight ratio 42 of the recycled raw material and the new raw material may be derived by applying the physical property derivation algorithm 400.

Meanwhile, even if basic physical properties of each raw material exist due to the characteristics of foam molding, physical properties of the midsole manufactured after foam-molding may be changed from the basic physical properties of each raw material. In consideration of the physical properties, the physical property derivation algorithm 400 is constructed as an AI algorithm such as deep learning, and specifically, as variables and weight elements, process information, mold shape information, raw material information, pattern information about a change in physical properties of a product according to a process, and the like may be applied thereto.

Meanwhile, according to the present invention, in addition to a method for manufacturing the midsole through foam-molding of the mixed raw material into the mold through a single nozzle, the midsole molding device 60 may be implemented as a device for manufacturing the midsole through multi-foam-molding for each part in order to implement various colors and physical properties required for each part of the midsole.

That is, as shown in FIG. 6, in the device of the present invention, the midsole molding device 60 may be implemented as a multi-nozzle type midsole molding device for performing foam-molding by supplying various types of the raw material into the mold. That is, as shown in FIG. 6, the midsole molding device 60 includes a mold 61, and foams the material in each region along a foaming line 63 from a plurality of nozzles 64, 65, and 66. In this case, the plurality of nozzles 64, 65, and 66 may be implemented such that mixed raw materials having mutually different weight ratios of the recycled raw material and the new raw material are foamed according to the above-described purpose.

In this case, in performing the above-described function, the raw material ratio calculation unit 40 needs to derive the mutually different weight ratios of the raw materials to be supplied for each nozzle. In this case, as for the information about the weight ratio 42 derived in FIG. 5, different required physical property information may be applied to each part, each part may be applied as identification information Nn of the nozzles 64, 65, and 66, and a ratio x1 of the recycled raw material and a ratio x2 of the new raw material may be set to be the same as or different from each other according to the identification information Nn of each nozzle as described above.

In this configuration, the raw material supply unit 50 may also supply recycled raw materials and new raw materials having different mutually weight ratios to the nozzles 64, 65, and 66, respectively. To this end, the raw material supply unit 50 may include detailed components as shown in FIG. 7.

First, as components of the raw material supply unit 50, a plurality of first transfer lines 51 for providing a movement path through which the raw material is transferred from the raw material storage unit 20 and the new raw material storage unit 30 are installed, respectively, and first valves 52, V11, and V12 for controlling supply of the raw material to be recycled and the new raw material may be installed along the first transfer line 51.

In this case, first pumps 53, P11, and P12 are installed in each of the first transfer lines 51 to provide a moving force of the raw material to be simultaneously controlled with the first valves 52, V11, and V12, thereby transferring the recycled raw material and the new raw material having a predetermined weight ratio to a mixing line 54. That is, the mixing line 54 is a component of the raw material supply unit 50, and is a transfer line which is combined with the first transfer lines 51 and in which the recycled raw material and the new raw material are mixed.

Accordingly, in the mixing line 54, the recycled raw material and the new raw material are mixed by a weight ratio at which the recycled raw material and the new raw material are to be supplied to each nozzle through the first pumps 53, P11, and P12 and the first valves 52, V11, and V12. In this case, a second transfer line 55 branching from a relay-type second valve V2 toward each of the nozzles 64, 65, and 66 refers to a detailed configuration of the raw material supply unit 50 branching from the mixing line 54 toward raw material temporary storage units 56, T1, T2, and T3 for supplying the raw materials to the plurality of nozzles 64, 65, and 66, respectively.

In this case, at a point in time when the recycled raw material and the new raw material are introduced while being mixed through the first pumps 53, P11, and P12 and the first valves 52, V11, and V12 by the weight ratio at which the recycled raw material and the new raw material are to be supplied to each nozzle, the second valve V2 may be controlled to be connected to one of the second transfer lines corresponding to a nozzle that is set such that the mixed raw material having the above-described weight ratio is supplied. That is, the second valve V2 refers to a relay-type valve that controls connection of each of the mixing line 54 and the second transfer line 55.

The raw material temporary storage units 56, T1, T2, and T3 temporarily store the mixed raw material for each nozzle transferred as described above for foaming, and in this case, the raw material temporary storage units 56, T1, T2, and T3 may be implemented to include a stirrer and a heater for foam-molding in a small tank type structure.

Second pumps 57, P21, P22, and P23 are detailed components of the raw material supply unit 50, and provide a transfer force for supplying the mixed raw material from a plurality of raw material temporary storage units 56, T1, T2, and T3 to the nozzles 64, 65, and 66.

In the above case, the first valves V11 and V12, the second valve V2, the first pumps P11 and P12, and the second pumps P21, P22, and P23 need to be controlled according to the above-described processes. To this end, a mixing control unit 58 is a detailed component of the raw material supply unit 50, and controls the first valves V11 and V12, the second valve V2, the first pumps P11 and P12, and the second pumps P21, P22, and P23 by using the weight ratio of the raw materials derived from the raw material ratio calculation unit 40 and the identification information Nn of the nozzles 64, 65, and 66 to which the weight ratio of the raw material is to be applied.

Meanwhile, when the physical properties are excessively different, coupling properties of a part in which the physical properties are rapidly changed in the multi-nozzle type foam-molding may be reduced, thereby causing a quality problem such as damage to the midsole. Accordingly, in the calculation of each weight ratio described above, for example, when weight ratios of two nozzles among the plurality of nozzles are derived, the raw material ratio calculation unit 40 may automatically derive a weight ratio of one nozzle, which foams the raw material in a region located between the two nozzles, as an average value of the weight ratios of the two nozzles. According to the above process, intermediate physical properties are obtained when the physical properties are changed in an intermediate region having different physical properties, so that the above-described coupling properties may be reduced, thereby minimizing the possibility of the occurrence of the quality problem such as damage to the midsole.

FIG. 8 shows an example of an internal configuration of a computing device according to one embodiment of the present invention. In the following description, unnecessary descriptions for embodiments redundant with those of FIGS. 1 to 7 will be omitted.

As shown in FIG. 8, a computing device 10000 may at least include at least one processor 11100, a memory 11200, a peripheral interface 11300, an input/output (I/O) subsystem 11400, a power circuit 11500, and a communication circuit 11600. In this case, the computing device 10000 may correspond to a user terminal A connected to a tactile interface device or correspond to the above-described computing device B.

The memory 11200 may include, for example, a high-speed random access memory, a magnetic disk, an SRAM, a DRAM, a ROM, a flash memory, or a non-volatile memory. The memory 11200 may include a software module, an instruction set, or other various data necessary for the operation of the computing device 10000.

In this case, access to the memory 11200 from other components of the processor 11100 or the peripheral interface 11300, may be controlled by the processor 11100.

The peripheral interface 11300 may combine an input and/or output peripheral device of the computing device 10000 to the processor 11100 and the memory 11200. The processor 11100 may execute the software module or the instruction set stored in the memory 11200, thereby performing various functions for the computing device 10000 and processing data.

The input/output subsystem 11400 may combine various input/output peripheral devices to the peripheral interface 11300. For example, the input/output subsystem 11400 may include a controller for combining the peripheral device such as monitor, keyboard, mouse, printer, or a touch screen or sensor, if needed, to the peripheral interface 11300. According to another aspect, the input/output peripheral devices may be combined to the peripheral interface 11300 without passing through the input/output subsystem 11400.

The power circuit 11500 may provide power to all or a portion of the components of the terminal. The power circuit 11500 may include a power management system, one or more power supplies such as a battery or alternating current (AC), a charging system, a power failure detection circuit, a power converter or inverter, a power status indicator, or any other components for power generation, management, and distribution.

The communication circuit 11600 may use at least one external port to enable communication with other computing devices.

Alternatively, as described above, the communication circuit 11600 may include an RF circuit, if needed, to transmit and receive an RF signal, also known as an electromagnetic signal, thereby enabling communication with other computing devices.

The above embodiment of FIG. 8 is merely an example of the computing device 10000, and the computing device 11000 may have a configuration or arrangement in which some components shown in FIG. 8 are omitted, additional components not shown in FIG. 8 are further provided, or at least two components are combined. For example, a computing device for a communication terminal in a mobile environment may further include a touch screen, a sensor, or the like, in addition to the components shown in FIG. 8. The communication circuit 11600 may include a circuit for RF communication of various communication schemes (such as WiFi, 3G, LTE, Bluetooth, NFC, and Zigbee). The components that may be included in the computing device 10000 may be implemented by hardware, software, or a combination of both hardware and software which include at least one integrated circuit specialized in a signal processing or an application.

The methods according to the embodiments of the present invention may be implemented in the form of program instructions to be executed through various computing devices so as to be recorded in a computer-readable medium. In particular, a program according to the embodiment of the present invention may be configured as a PC-based program or an application dedicated to a mobile terminal. The application to which the present invention is applied may be installed in a user terminal through a file provided by a file distribution system. For example, a file distribution system may include a file transmission unit (not shown) that transmits the file according to the request of the user terminal. The above-described device may be implemented by hardware components, software components, and/or a combination of hardware components and software components. For example, the devices and components described in the embodiments may be implemented by using at least one general purpose computer or special purpose computer such as a processor, a controller, an arithmetic logic unit (ALU), a digital signal processor, a microcomputer, a field programmable gate array (FPGA), a programmable logic unit (PLU), a microprocessor, or any other device capable of executing and responding to instructions. The processing device may execute an operating system (OS) and at least one software application executed on the operating system. In addition, the processing device may access, store, manipulate, process, and create data in response to the execution of the software. For the further understanding, in some cases, one processing device may be used, however, those skilled in the art will be appreciated that the processing device may include a plurality of processing elements and/or a plurality of types of processing elements. For example, the processing device may include a plurality of processors or one processor and one controller. In addition, other processing configurations, such as a parallel processor, are also possible.

The software may include a computer program, a code, an instruction, or a combination of at least one thereof, may configure the processing device to operate as desired, or may instruct the processing device independently or collectively. In order to be interpreted by the processor or to provide instructions or data to the processor, the software and/or data may be permanently or temporarily embodied in any type of machine, component, physical device, virtual equipment, and computer storage medium or device. The software may be distributed over computing devices connected to networks, so as to be stored or executed in a distributed manner. The software and data may be stored in at least one computer-readable recording medium.

The above-described embodiments of the present invention may be recorded in computer-readable media including program instructions to implement various operations embodied by a computer. The media may also include, alone or in combination with the program instructions, data files, data structures, and the like. The program instructions recorded on the media may be those specially designed and constructed for the purposes of the embodiments, or they may be of the kind well-known and available to those having skill in the computer software arts. Examples of computer-readable recording media include magnetic media such as hard disks, floppy disks, and magnetic tape; optical media such as CD ROM disks and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention, or vice versa.

While the embodiments have been described with reference to limited examples and drawings as described above, it will be apparent to one of ordinary skill in the art that various changes and modifications may be made from the above description. Suitable results may be achieved if the described techniques are performed in a different order, and/or if components in a described system, architecture, device, or circuit are combined in a different manner, and/or replaced or supplemented by other components or their equivalents. Therefore, other implementations, other embodiments, and equivalents of the claims are within the scope of the following claims.

## Claims

1. A midsole manufacturing device capable of controlling a mixing ratio of recycled and new EVA foam, which is implemented with a computing device including one or more processors and one or more memories for storing instructions executable in the processors, the midsole manufacturing device comprising:
a recycled raw material production unit that produces a recycled raw material by processing a waste subsidiary material;
a recycled raw material storage unit that stores the recycled raw material produced by the recycled raw material production unit;
a new raw material storage unit that stores a new raw material, which is EVAfoam, by receiving the new raw material;
a midsole molding device that receives the recycled raw material and the new raw material from the recycled raw material storage unit and the new raw material storage unit, respectively,
to manufacture a midsole using a mixed raw material;
a raw material ratio calculation unit that receives physical property information about the recycled raw material and the new raw material from the recycled raw material storage unit and the new raw material storage unit, respectively, and derives a weight ratio of the recycled raw material and the new raw material by using required physical property information input from a customer account and physical properties of the recycled raw material and the new raw material; and
a raw material supply unit that supplies the recycled raw material and the new raw material to the midsole molding device according to the weight ratio derived from the raw material ratio calculation unit.

2. The midsole manufacturing device of claim 1, wherein the recycled raw material production unit includes:
an inlet unit into which a waste subsidiary material discharged when the midsole is manufactured and an external waste subsidiary material are introduced;
a pre-treatment unit that treats the waste subsidiary material introduced from the inlet unit to process the waste subsidiary material into a material to be recycled; and
a recycled material production unit that produces recycled powder by pulverizing and
processing the material to be recycled, which is processed by the pre-treatment unit.

3. The midsole manufacturing device of claim 2, wherein the recycled raw material production unit further includes:
a first physical property sensing unit that is installed in a transfer line for transferring the material to be recycled, which is processed by the pre-treatment unit, to sense physical properties of the material to be recycled that is moved; and
a control unit that transfers the material to be recycled to one of a suitable material transfer line for transferring the material to be recycled to the recycled material production unit and a waste transfer line for transferring the material to be recycled to an outside for waste treatment,
serving as a line branching from the transfer line according to a sensing result of the first physical property sensing unit.

4. The midsole manufacturing device of claim 3, wherein the first physical property sensing unit includes:
an image capturing device that is installed on an upper surface of the transfer line to capture an image of the material to be recycled at a plurality of angles;
a volume calculation unit that generates a three-dimensional image of the material to be recycled based on the image captured by the image capturing device and calculates a volume of the material to be recycled from the generated three-dimensional image;
a load sensor that is installed in the transfer line to sense a load of the material to be recycled;
a density calculation unit that calculates a density of the material to be recycled based on the volume calculated by the volume calculation unit and the load sensed by the load sensor; and
a recyclability determination unit that determines supply of the material to be recycled to the recycled material production unit by comparing the density of the material to be recycled, which is calculated by the density calculation unit, with a pre-stored range section of a suitable density of an EVA material.

5. The midsole manufacturing device of claim 1, further comprising:
a second physical property sensing unit that is installed in the recycled raw material storage unit to sense the physical properties of the recycled raw material; and
a third physical property sensing unit that is installed in the new raw material storage unit to sense the physical properties of the new raw material,
wherein the raw material ratio calculation unit receives the physical property information about the recycled raw material and the new raw material from the second physical property sensing unit and the third physical property sensing unit, respectively, and applies the physical property information about the recycled raw material, the physical property information about the new raw material, and the required physical property information to a physical property derivation algorithm, which is an algorithm for deriving physical property information using two different physical property information, to derive the weight ratio of the recycled raw material and the new raw material.

6. The midsole manufacturing device of claim 5, wherein the physical property information includes information about elasticity, heat resistance, stretchability, pressure resistance, and density, and
wherein the second physical property sensing unit and the third physical property sensing unit include:
component analysis devices that are installed in the recycled raw material storage unit and the new raw material storage unit, respectively; and
a physical property derivation unit that derives physical property information about a measured target raw material by comparing a component of a material derived from the component analysis device with a physical property information of materials pre-stored in a physical property information table.

7. The midsole manufacturing device of claim 1, wherein the midsole molding device is a multiple-nozzle type midsole molding device which supplies a various types of raw materials into a mold to perform foam-molding, in which mixed raw materials having mutually different weight ratios of a recycled raw material and a new raw material are foamed in a plurality of nozzles, and the raw material ratio calculation unit derives mutually different weight ratios of raw materials to be supplied for each nozzle.

8. The midsole manufacturing device of claim 7, wherein the raw material supply unit includes:
a plurality of first transfer lines that provide a movement path through which the raw materials are transferred from the recycled raw material storage unit and the new raw material storage unit;
a first valve that is installed for each of the first transfer lines;
a first pump that is installed in each of the first transfer lines to provide a moving force;
a mixing line which is combined with the first transfer lines and in which the recycled raw material and the new raw material are mixed;
a plurality of second transfer lines branching from the mixing line toward a raw material temporary storage unit for supplying the raw materials to the plurality of nozzles;
a relay-type second valve that controls connection of the mixing line and each of the second transfer line;
a second pump that supplies the mixed raw material from a plurality of temporary raw material storage units to the nozzle; and
a mixing control unit that controls the first valve, the second valve, the first pump, and the second pump using the weight ratio of the raw material derived from the raw material ratio calculation unit and identification information of the nozzle to which the weight ratio of the raw material is to be applied.

9. The midsole manufacturing device of claim 7, wherein, when the weight ratios of the two nozzles are derived from among the plurality of nozzles, the raw material ratio calculation unit automatically derives a weight ratio of one nozzle, which foams the raw material in a region located between two nozzles, as an average value of weight ratios of the two nozzles.
